Europäisches Patentamt

European Patent Office

Office européen des brevets

(11) Publication number: **0 270 377 B1**

# EUROPEAN PATENT SPECIFICATION

(45) Date of publication of patent specification: **15.04.92**   (51) Int. Cl.⁵: **C04B** **35/00**, C04B 35/02, C04B 35/52

(21) Application number: **87310707.2**

(22) Date of filing: **04.12.87**

(54) **Process for the manufacture of refractory articles.**

(30) Priority: **04.12.86 GB 8629012**

(43) Date of publication of application:
**08.06.88 Bulletin 88/23**

(45) Publication of the grant of the patent:
**15.04.92 Bulletin 92/16**

(84) Designated Contracting States:
**DE FR GB GR SE**

(56) References cited:
**EP-A- 164 139**
**GB-A- 1 094 590**
**US-A- 4 348 343**

(73) Proprietor: **BORDEN (UK) LIMITED**
**North Baddesley**
**Southampton S05 9ZB(GB)**

(72) Inventor: **Lemon, Peter Herbert Richard Bryan**
**"Pandale", Newton Road Sherfield English**
**Romsey Hampshire(GB)**
Inventor: **Ireland, John**
**39 Obelisk Road**
**Woolston Southampton(GB)**

(74) Representative: **Wilkinson, Stephen John et al**
**Stevens, Hewlett & Perkins 1 St. Augustine's**
**Place**
**Bristol BS1 4UD(GB)**

Rank Xerox (UK) Business Services

## Description

This invention relates to a process for the manufacture of refractory articles. More particularly, the invention concerns a process for the manufacture of refractory articles of improved carbon yield by a cold coating process.

Conventional processes for the production of refractory articles such as tiles and bricks for furnaces involve the use of pitch as a binder, compression of the mixture in a mould to the required shape and subsequent carbonisation of the binder by heating at temperatures in excess of 500°C.

One of the disadvantages of the use of pitch as a binder is that it is a suspected carcinogen and consequently is believed to constitute a threat to the health of workers using it.

A further disadvantage is that it has been found necessary, not only to heat the pitch to temperatures of about 80°C or above to reduce the viscosity sufficiently for efficient coating of the particles, but also to maintain it at elevated temperature, generally at or above 80°C, so that it retains sufficient cohesion to permit bonding to occur during the subsequent compression moulding operation.

In addition, the thermoplastic nature of pitch leads, in some cases, to sagging or other distortion of the moulded articles when the refractory object is subjected to the high temperatures required for the carbonisation step.

It is a further disadvantage of pitch-bonded refractory materials that the carbon yield of the binder is low.

Consequently, attempts have been made to replace pitch with synthetic resin binders, particularly binders based on phenolic resins. Such binders are less noxious in use and can be thermoset, so that problems of distortion are eliminated. Moreover, phenolic resin binders exhibit considerably higher carbon yields than pitch and, in consequence, provide refractory articles having higher density and lower porosity.

One requirement of refractory coating compositions is that they should be of sufficiently low viscosity to coat the particles adequately without demanding excessively high shear forces or elevated temperatures. The higher the shear force required, the greater the load on the mixing equipment, the higher the power consumption, the greater the wear on the equipment and the less efficient the mixing.

A further requirement of such compositions, however, is that they should impart high green strength to the articles produced by compression moulding, so that the latter have sufficient strength to withstand removal from the mould, handling and transport, prior to curing and carbonising. If the green strength is low, there is a greater likelihood of damage to the moulded articles during removal from the moulds and they are less capable of resisting damage through abrasion or impact during handling and transport to the curing stage.

These two requirements are in mutual opposition. A binder which possesses low viscosity and thus exhibits favourable properties during the coating operation will generally impart poor green strength at the moulding stage. Conversely, a high viscosity binder, although possibly imparting good green strength, will usually have poor coating performance and will increase the torque required for the mixing operation and, in consequence, the power consumption and wear on the equipment.

When an attempt is made to replace pitch as a binder by a synthetic resin, such as, for example, a phenolic novolak resin containing hexamine as a curing agent, it is not possible to apply heat to maintain the resin in the molten state for an extended period without a rapid increase in viscosity as a result of a condensation reaction. On the other hand, as the mixture cools, the pressure required to cause the mixture to cohere increases, necessitating repeated ramming or compression and reducing the final density of the product.

Attempts have been made to produce a temporary reduction in viscosity to aid mixing by incorporating a solvent into the composition. However, such low viscosity compositions will generally exhibit poor green strengths, because of the poor cohesive strength of the low viscosity binder.

EP-A-164139 describes a method of making CaOcontaining refractory bricks using, as binder, a phenolic novolak resin dissolved in a mixture of at least two mutually miscible solvents having different boiling points. The use of the solvent mixture reduces the risk of cracking in the bricks.

The cohesive strength of a coated refractory material may be increased by evaporating a proportion of the solvent so as to increase the viscosity. However, if the viscosity of the coating on the particles is increased too far, its ability to coalesce when subjected to pressure will be reduced and, in the extreme case, dry, free-flowing coated particles exhibiting little or no tendency to cohere, will result. Consequently, evaporation of the solvent requires to be controlled within narrow limits and this method of operation has been found in practice to give rise to very variable results and is difficult to apply successfully.

We have now found that these several disadvantages may be overcome by employing, as a finder for refractory articles, a composition comprising a phenolic resin dissolved in a low boiling solvent therefor, which serves to reduce the viscosity during the coating operation but which may then be readily evaporated so as to increase the viscosity and green strength once coating has been effected, in conjunction with a high boiling solvent which serves to maintain an adequate level of cohesiveness.

By employing the low boiling solvent the viscosity of the resin can be reduced to a level which permits effective and economic coating of particles. However once the low boiling solvent has been evaporated the high boiling solvent ensures that the green strength is adequate to enable the refractory articles to be stripped from the moulds and handled without undue danger of damage.

Accordingly, the present invention comprises a method for the manufacture of refractory articles by coating granular refractory particles with a solution of a phenolic resin binder composition, evaporating solvent and subjecting the coated particles to compression in a mould, characterised in that the phenolic resin is dissolved in a mixture of solvents having low and high rates of evaporation, at least a major proportion of the solvent or solvents having a high rate of evaporation being evaporated during the evaporation step and at least sufficient of the solvent having a low rate of evaporation being retained to impart cohesion to the coated granules during the subsequent compression moulding operation.

The refractory particles to which the present invention may be applied may be any of the refractory particles commonly employed for the production of refractory articles, such as, for example, magnesia, doloma (calcined dolomite) or graphite or mixtures thereof.

The binder resin used is a phenolic resin. Although resoles can be used, novolak resins are preferred. such resin are well known in the art and are described, for example, in U.S. Patent No. 3,020,254, British Patent No. 966678 and many others.

Phenol-formaldehyde novolaks are generally prepared by the condensation of phenol with formaldehyde in the presence of an acid catalyst, the formaldehyde being present in the mixture in less than the stoichiometrically equivalent amount and generally at a mole ratio of phenol to formaldehyde of from 1:0.4 to 1:0.9. Acids which are useful as catalysts in the preparation of novolak resins include mineral acids, such as, for example, hydrochloric acid and sulphuric acid, organic acids, such as, oxalic acid, maleic acid and salicylic acid, as well as sulphonic acids, such as p-toluene sulphonic acid and phenol sulphonic acid, and lewis acids, such as, zinc acetate, ferric chloride and boron trifluoride. To convert the phenol formaldehyde novolak resin to the thermoset state, a curing agent, such as formaldehyde, paraformaldehyde or, more commonly, hexamethylene tetramine is added to the resin. Alternatively, or in addition, a phenolic resole may be employed to effect curing of the novolak resin. Such a combination is described, inter alia, in British Patent No. 1 094 590. The proportion of curing agent to be added will vary with the nature of the curing agent and with the type of resin, but will be readily determinable by simple trial. Generally, where hexamethylene tetramine is employed, an amount between 5 percent and 25 percent, preferably between 10 percent and 15 percent, based on the weight of the phenolic novolak resin in the binder, will result in adequate cure on heating. In the case of phenolic novolak resins cured with phenolic resole resins, where use is made of the free methylol groups in the resole to effect cure by reaction with the novolak, the ratio of novolak to resole will vary considerably according to the properties of the two resins. In particular, a larger proportion of resole will generally be required as the molecular size of the novolak is reduced and with a decrease in the degree of methylolation of the resole, and care must be taken that the proportion of resole is sufficient to effect adequate curing of the novolak. On the other hand, since a phenolic resole is heat curable without added cross-linking agent, excess of resole is less likely to result in unsatisfactory cure.

The binder is preferably used in amounts of from 1 to 10 percent, more preferably 2 to 6 percent, based on the weight of refractory material. It will be obvious to those skilled in the art to vary the amount of binder in accordance with the particle size of the refractory material and the strengths required in any particular case. A higher percentage of resin is required in the case of fine particles than in the case of coarse particles to achieve equivalent strengths.

High boiling solvents which may be employed for the purpose of the present invention are those having a boiling point of between 150°C and 350°C, preferably between 200°C and 300°C.

Examples of suitable materials are dibutyl phthalate, monoethylene glycol and furfuryl alcohol.

The low boiling solvent is a volatile liquid which typically has a vapour pressure at 20°C of greater than 40 mmHg (5.3 kPa) and is at least compatible with the mixture of phenolic resin and the high boiling solvent, such as, for example, the C1-C3 alcohols, esters of formic, acetic or propionic acid with C1-C3 alcohols, halogenated C1-C3 hydrocarbons or the C3-C4 ketones. Ethers may be used but are not recommended. For reasons of cost and availability, methanol is the preferred low boiling solvent.

As to proportions, the amount of the high boiling solvent required will increase with the molecular weight of the phenolic resin and may be reduced if the pressing operation is conducted at higher temperatures. The behaviour of the binder composition and, consequently, the proportion of high boiling solvent, will also vary with variation in the amount of low boiling solvent, if any, retained in the system at the pressing stage and with the nature of the high boiling solvent used. We have found, however, that from about 1 to about 30 percent, preferably 5 to 20 percent of the high boiling solvent, based on the weight of phenolic resin, will give satisfactory results. The amount of low boiling solvent employed will be that required to reduce the viscosity to between 5 and 20 poises at the mixing temperature and this amount may be readily determined in any particular case by simple experiment. In the case where methanol is employed as the low boiling solvent we have found than an amount between 3 percent and 30 percent by weight and more particularly between 5 percent and 25 percent by weight of the binder composition is satisfactory where mixing is to be carried out at 30°C. The amounts required will, however, vary with the nature of the phenolic resin, the proportion of high-boiling solvent incorporated in the mix, the nature of the low-boiling solvent selected and the fineness and absorbency of the refractory particles, in addition to being variable according to the temperature at which mixing is carried out. The aim will generally be to add the minimum amount of low boiling solvent, since it plays only a transient role and must be evaporated after the mixing operation has been completed, while avoiding excessively high viscosities and unnecessarily high mixing temperatures, which would give rise to the difficulties referred to above.

The mixing of the resin binder composition comprising the two solvents with the particulate refractory material is carried out in conventional heavy duty mixing equipment such as a z-blade mixer, a muller or a pug mill. In any event, the object will be to evaporate the volatile carrier solvent as mixing proceeds and this is most conveniently accomplished by the use of an open mill and, preferably, by circulating air through the equipment. This may be done either by directing a forced draft into the mix while it is being agitated or by drawing air through the mix by applying a negative pressure. The latter approach has the advantage of allowing the disposal of the solvent vapours to be easily controlled.

As the solvent evaporates, the solution of resin becomes more concentrated and the viscosity rises. However, adequate dispersion of the binder over the particles of refractory material is achieved in the early stages of mixing. As to temperature, the mixing operation may be carried out at room temperature, although the use of warm air for the evaporation of the low boiling solvent will generally be advantageous, in order to reduce the time required for evaporation. Further evaporation of the solvent will occur during transportation to the pressing station.

The resin coated refractory material is then fed into moulds and subjected to pressure to form shaped articles which are coherent as a consequence of the high green strength of the resin binder. Satisfactory results have been achieved at temperatures as low as -4°C. However, it is generally desirable to employ a minimum of high boiling solvent, in order to minimise any tendency of the coated refractory to lump on storage. Consequently, it may be found desirable to apply some heat during the pressing operation and/or to subject the coated refractory to multiple pressings, with or without an increase in applied pressure.

Immediately after pressing, the shaped articles are removed from the moulds and subsequently stage cured at 100° to 250°C, prior to firing at high temperatures, typically 600-1000°C in a reducing atmosphere. The effect of this is firstly to cure the phenolic resin binder and secondly to carbonise it. The curing of the resin serves to ensure that the distortion of the article during the heating stage prior to carbonisation is avoided.

By suitable selection of the ratio of evaporatable solvent to non-evaporating solvent to base novolac resins can be formulated for use at a selected range of mix temperatures to give bricks of the required density for a long mix life. A mix temperature around ambient would be ideal since it gives the longest life without increasing green strength due to falling temperature or hexa/resin reaction.

Resin compositions prepared using furfuryl alcohol and dibutyl phthalate as the high boiling solvent are particularly useful for doloma refractory blends since they do not allow easy transfer of calcium ions which tend to form salts with the phenolic hydroxyl group in the novolak. This leads to a form of cross-linking of the resin and to the apparent 'drying out' of the mix.

The following examples in which all parts are by weight, unless otherwise specified, illustrate the invention.

Preparation of phenolic resin:

1 mol of 100% phenol was reacted with 0.5 mols of formaldehyde in the form of a 50% aqueous solution under acid conditions to form a novolak resin. The novolak was steam distilled to reduce free phenol to below 3.0% and dehydrated by heating under full vacuum until the temperature rose to 150°C. This base resin was then dissolved in high boiling solvent and subsequently diluted with low boiling solvent. The proportion of low boiling solvent was varied as required to give a suitable working viscosity, which was generally in the region of 4.0 to 6.0 poises at 50 C.

The following table summarises the compositions used:

| Example | Novolak base | Monoethylene glycol | Methanol | Viscosity at 50°C |
|---------|--------------|---------------------|----------|-------------------|
| 1 | 80 | 8 | 12.0 | 4.0 |
| 2 | 80 | 11 | 10.3 | 5.2 |
| 3 | 80 | 15 | 8.2 | 6.0 |
| | | Dibutyl phthalate | | |
| 4 | 80 | 8 | 13.9 | 4.0 |
| 5 | 80 | 11 | 12.2 | 5.0 |
| 6 | 80 | 15 | 11.7 | 5.2 |
| | | Furfuryl alcohol | | |
| 7 | 80 | 8 | 12.0 | 5.6 |
| 8 | 80 | 11 | 9.0 | 6.0 |
| 9 | 80 | 15 | 11.7 | 4.4 |

Preparation of refractory mixes and bricks

The resins of Examples 1 to 9 were used to make up refractory mixes having the following compositions

| | A | B |
|---|---|---|
| Magnesia | 1900 kg | 1700 kg |
| Graphite | 100 kg | 300 kg |
| Resin as Examples 1 - 9 | 110 kg | 110 kg |
| Hexamine powder | 10 kg | 10 kg |

The mixes were made by mixing the aggregate until the temperature rose to 30 - 35°C, adding resin and hexamine, blowing warm air at 50°C through the mixture for 20 - 30 minutes and then discharging into insulated containers. Bricks were pressed once at a pressure of 8 tonnes per square inch and at a temperature of 25 to 30°C.

Samples of each of the mixes so made were allowed to stand for up to four hours and the tested at intervals. Densities comparable to those obtained with conventional hot pitch binder at 75°C were obtained even after four hours. Samples of a conventional mix using pitch as binder, on the other hand, required a double pressing to achieve a satisfactory density after standing for only one hour.

The mixer was fitted with a conventional fume extraction system and explosimeter readings made during the operation were well below the explosive limits. Draeger tests also showed that the TLV (threshold limit value) was not exceeded.

**Claims**

1.   A method for the manufacture of a shaped refractory article comprising coating granular refractory particles with a solution of a binder composition containing a curable phenolic resin, evaporating the solvent and subjecting the coated particles to compression in a mould wherein the phenolic resin is dissolved in a mixture of at least one solvent having a low rate of evaporation and at least one solvent having a high rate of evaporation, at least a major proportion of the solvent or solvents having a high rate of evaporation being evaporated during the evaporation stage and wherein the solvent or solvents having a low rate of evaporation is retained after the evaporation stage in an amount sufficient to impart cohesion to the coated granular refractory particles during the compression moulding stage, the solvent having a high rate of evaporation being a volatile liquid having a vapour pressure at 20°C of greater than 40 mmHg (5.3 kPa).

**2.** A method according to claim 1, wherein the binder composition comprises a phenol-formaldehyde novolak resin and at least one curing agent therefor.

**3.** A method according to either claim 1 or claim 2, wherein the binder composition is dissolved in a mixture of a high boiling solvent and a low boiling solvent.

**4.** A method according to claim 3, wherein the high boiling solvent has a boiling point in the range of from 150° to 350°C.

**5.** A method according to claim 4, wherein the high boiling solvent is selected from dibutyl phthalate, monoethylene glycol and furfuryl alcohol.

**6.** A method according to any one of claims 3 to 5, wherein the low boiling solvent is selected from 1-3C alkanols, formic, acetic or propionic acid esters of 1-3C alkanols, halogenated 1-3C hydrocarbons and 3-46 alkanones.

**7.** A method according to claim 6, wherein the low boiling solvent is methanol.

**8.** A method according to any one of claims 1 to 7, wherein the shaped article, after the compression moulding stage, is removed from the mould, the phenolic resin is cured and then carbonised by firing.

**Revendications**

**1.** Procédé pour fabriquer un objet réfractaire de forme, consistant à revêtir des particules réfractaires granulaires d'une solution d'une composition de liant contenant une résine phénolique durcissable, à évaporer le solvant et à comprimer les particules revêtues dans un moule, procédé dans lequel la résine phénolique est dissoute dans un mélange d'au moins un solvant ayant un faible taux d'évaporation et d'au moins un solvant ayant un taux d'évaporation élevé, au moins une proportion importante du(des) solvant(s) ayant un taux d'évaporation élevé étant évaporée pendant le stade d'évaporation, et dans lequel le(s) solvant(s) ayant un faible taux d'évaporation est(sont) retenu(s) après le stade d'évaporation en une quantité suffisante pour impartir de la cohésion aux particules réfractaires granulaires revêtues pendant le stade de moulage par compression, le solvant ayant un taux d'évaporation élevé étant un liquide volatil ayant une tension de vapeur à 20°C supérieure à 5,3 kPa (40 mm Hg).

**2.** Procédé selon la revendication 1, dans lequel la composition de liant comprend une résine novolaque phénol-formaldéhyde et au moins un agent de durcissement pour cette résine.

**3.** Procédé selon l'une des revendications 1 ou 2, dans lequel la composition de liant est dissoute dans un mélange d'un solvant à point d'ébullition élevé et d'un solvant à bas point d'ébullition.

**4.** Procédé selon la revendication 3, dans lequel le solvant à point d'ébullition élevé a un point d'ébullition compris entre 150 et 350°C.

**5.** Procédé selon la revendication 4, dans lequel le solvant à point d'ébullition élevé est choisi parmi le phtalate de dibutyle, le monoéthylène glycol et l'alcool de furfuryle.

**6.** Procédé selon l'une des revendications 3 à 5, dans lequel le solvant à bas point d'ébullition est choisi parmi des alcanols à 1 à 3 atomes de carbone, des esters d'acide formique, acétique ou propionique d'alcanols à 1 à 3 atomes de carbone, des hydrocarbures halogénés à 1 à 3 atomes de carbone et des alcanones à 3 ou 4 atomes de carbone.

**7.** Procédé selon la revendication 6, dans lequel le solvant à bas point d'ébullition est le méthanol.

**8.** Procédé selon l'une quelconque des revendications 1 à 7, dans lequel, après le stade de moulage par compression, l'objet de forme est retiré du moule, la résine phénolique est durcie et ensuite carbonisée par cuisson.

**Patentansprüche**

1. Verfahren zur Herstellung eines feuerfesten Formkörpers, umfassend das Überziehen von körnchenförmigen fernerfesten Teilchen mit einer Lösung einer Bindemittelmasse, enthaltend ein härtbares Phenolharz, Verdampfen des Lösungsmittels und Pressen der feuerfesten Teilchen in einer Form, wobei das Phenolharz in einem Gemisch aus mindestens einem Lösungsmittel mit einer geringen Verdampfungsgeschwindigkeit und mindestens einem Lösungsmittel mit einer hohen Verdampfungsgeschwindigkeit gelöst wird, wobei ein Hauptteil des Lösungsmittels oder der Lösungsmittel mit einer hohen Verdampfungsgeschwindigkeit während der Verdampfungsstufe verdampft und wobei das Lösungsmittel oder die Lösungsmittel mit einer geringen Verdampfungsgeschwindigkeit nach der Verdampfungsstufe in einer ausreichenden Menge noch vorhanden ist/sind, um den Überzogenen körnchenförmigen fernerfesten Teilchen Zusammenhalt zu verleihen, wobei das Lösungsmittel mit der hohen Verdampfungsgeschwindigkeit eine flüchtige Flüssigkeit mit einem Dampfdruck bei 20°C größer 40 mmHg (5,3 kPa) ist.

2. Verfahren nach Anspruch 1, wobei das Bindemittel ein Phenol/Formaldehyd-Novolackharz und mindestens ein Härtungsmittel dafür umfaßt.

3. Verfahren nach Anspruch 1 oder Anspruch 2, wobei das Bindemittel in einem Gemisch aus einem hochsiedenden Lösungsmittel und einem niedrigsiedenden Lösungsmittel gelöst wird.

4. Verfahren nach Anspruch 3, wobei das hochsiedende Lösungsmittel einen Siedepunkt im Bereich von 150 bis 350°C besitzt.

5. Verfahren nach Anspruch 4, wobei das hochsiedende Lösungsmittel ausgewählt ist aus Dibutylphthalat, Monoethylenglykol und Furfurylalkohol.

6. Verfahren nach einem der Ansprüche 3 bis 5, wobei das niedrigsiedende Lösungsmittel ausgewählt ist aus $C_1$-$C_3$-Alkanolen, Ameisensäure-, Essigsäure- oder Propionsäureestern von $C_1$-$C_3$-Alkanolen, halogenierten $C_1$-$C_3$-Kohlenwasserstoffen und $C_3$-$C_4$-Alkanonen.

7. Verfahren nach Anspruch 6, wobei das niedrigsiedende Lösungsmittel Methanol ist.

8. Verfahren nach einem der Ansprüche 1 bis 7, wobei der Formkörper nach dem Pressen aus der Form entnommen, das phenolische Harz gehärtet und dann durch Brennen carbonisiert wird.